# EUROPÄISCHE PATENTSCHRIFT

(11) **EP 0 541 582 B1**
(45) Veröffentlichungstag und Bekanntmachung des Hinweises auf die Patenterteilung: **27.04.1994**
(21) Anmeldenummer: 91912785.2
(22) Anmeldetag: 10.07.1991
(51) Int. Cl.: F01N 3/28, F01N 5/02

(54) **ABGASANLAGE EINER BRENNKRAFMASCHINE**
EXHAUST GAS INSTALLATION IN AN INTERNAL COMBUSTION ENGINE
SYSTEME D'ECHAPPEMENT DES GAZ DANS UN MOTEUR A COMBUSTION INTERNE

(30) Priorität: 04.08.1990 DE 4024801
(43) Veröffentlichungstag der Anmeldung: 19.05.1993
(73) Patentinhaber: Dr.Ing.h.c. F. Porsche Aktiengesellschaft, 70435 Stuttgart (DE)
(72) Erfinder: RUTSCHMANN, Erwin, D-7533 Tiefenbronn (DE)
(86) Internationale Anmeldenummer: EP9101287
(87) Internationale Veröffentlichungsnummer: WO9202715

(56) Entgegenhaltungen:
- DE-A- 2 452 675
- DE-A- 2 851 675
- DE-A- 3 039 742
- DE-A- 3 721 810
- US-A- 3 934 412
- US-A- 4 188 783

## Beschreibung

Die Erfindung betrifft eine Abgasanlage einer mehrzylindrigen Brennkraftmaschine nach dem Oberbegriff des Anspruchs 1.

In der DE- 2 452 675 ist eine Abgasanlage offenbart, bei der die Abgase über eine Sammelleitung in ein von einem Außengehäuse umgebenes Innengehäuse strömen. Dabei erreichen die Abgase zunächst zentral eine Nachbrennkammer und werden von dort als getrennte Ströme durch zwei an gegenüberliegenden Enden des Innengehäuses angeordnete Katalysatoren in das Außengehäuse geführt, in dem sich die Abgasströme wieder vermischen und über einen gemeinsamen Auslaß in die Atmosphäre gelangen.

Aus der DE- 21 17 771 ist eine Abgasanlage bekannt, bei der die von jeweils einer Zylinderreihe der Brennkraftmaschine in einen Schalldämpfertopf geführten Rohrstücke innerhalb dieses Topfes perforiert ausgeführt sind. Die DE- 39 30 380 zeigt eine Abgasanlage einer mehrzylindrigen Brennkraftmaschine, bei der in die unmittelbar an den Zylinderkopf angeschlossenen Abgasrohre Startkatalysätoren geschaltet sind, die einen durch ein Klappe verschließbaren Zentralkanal und einen ihn umgebenden, das Katalysatormaterial enthaltenden Ringkanal aufweisen.

Der Erfindung liegt die Aufgabe zugrunde, eine Abgasanlage für eine Brennkraftmaschine zu schaffen, die bei raumsparender Anordnung einen geringen Abgasgegendruck aufweist und eine optimale Abgasreinigung erzielt.

Die Lösung dieser Aufgabe gelingt mit den Merkmalen des Patentanspruches 1. Weitere, die Erfindung vorteilhaft ausgestaltende Merkmale sind in den Unteransprüchen benannt.

Der geringe Abgasgegendruck wird durch die zentrale Anordnung der Expansionskammer und das anschließende vollständige, symmetrische Beaufschlagen der Katalysatoren erzielt.

Das Abführen der die Katalysatoren durchströmenden Abgase über separate Ausläße sorgt ebenfalls für einen symmetrischen, niedrigen Abgasgegendruck. Die zentrale Lage der Expansionskammer ermöglicht weiterhin eine raumsparende Anordnung dieser Kammer und der benachbarten Katalysatoren in einem gemeinsamen Gehäuse. Die Abgase können über kurze Rohre und Leitungen der katalytischen Reinigung zugeführt werden. Somit erreichen die Katalysatoren schnell ihre für eine optimale Abgasreinigung erforderliche Temperatur.
Das Einströmen der Abgase in die zentral in dem Gehäuse angeordnete Expansionskammer und das dortige Trennen in zwei separate Abgasströme, die über großflächige, perforierte Bleche direkt ohne Querschnittsverengung die Hauptkatalysatoren beaufschlagen, ermöglicht ein schnelles, paralleles Durchströmen der Hauptkatalysator-Monolithen und das anschließende Abführen der gereinigten Abgase über je einen separaten Auslaß.
Der geringe Abgasgegendruck begünstigt eine gute Leistungsentfaltung der Brennkraftmaschine bei gleichzeitig verringertem Kraftstoffverbrauch. Die Anordnung des Gehäuses quer zur Längsrichtung der Brennkraftmaschine ermöglicht eine symmetrische Leitungsführung und bietet ein großes Bauvolumen für die Unterbringung der Hauptkatalysatoren. Ein großes Katalysatorvolumen ist Voraussetzung für eine hohe Lebensdauer des Katalysators.
Ein die Katalysatoren umgebendes Dämpfervolumen wirkt zusammen mit der vor den Hauptkatalysatoren angeordneten Expansionskammer dämpfend, was zum einen akustische Vorteile bringt, zum anderen Druckspitzen im Abgasstrom abbaut, die sonst zur Beschädigung der Katalysatoren bzw. des gesamten Gehäuses führen können. Das große Volumen der Abgasanlage wirkt dämpfend auf Druckschwankungen.
Je nach Hubvolumen der Brennkraftmaschine und nach akustischen Anforderungen können alle Abgasrohre in einer Abgassammelleitung zusammen in die Expansionskammer geführt werden oder es kann jeweils einer Zylinderreihe eine eigene Sammelleitung zugeordnet sein.
Aus akustischen und strömungstechnischen Gründen sowie aufgrund der Bauteilfestigkeit hat es sich als vorteilhaft erwiesen, die Endstücke der Sammelleitung in der Expansionskammer endseitig zu verschließen und das Abgas über Öffnungen auf ihrer Mantelfläche austreten zu lassen.

Um auch schärfste Abgasbestimmungen zu erfüllen, können in der oder in den Abgassammelleitungen Startkatalysatoren eingesetzt sein, deren geringe Monolith-Masse durch die brennraumnahe Anordnung besonders schnell ihre Arbeitstemperatur erreichen.
Diese Startkatalysatoren können z. B. als schaltbare Katalysatoren ringförmige Monolithen aufweisen, welche einen zunächst verschlossenen Zentralkanal umgeben. Nach dem Erreichen der Arbeitstemperatur der Hauptkatalysatoren wird der Zentralkanal geöffnet, so daß das Abgas die Monolithen nicht mehr durchströmt. Für eine besonders schnell wirkende Abgasreinigung kann jedem einzelnen Zylinder der Brennkraftmaschine ein eigener, in dem jeweiligen Abgasrohr eingesetzter Startkatalysator zugeordnet sein.

In vorteilhafter Ausgestaltung der Erfindung kann das Gehäuse doppelwandig als Wärmetauscher ausgeführt und mit Stutzen versehen sein. Über diese Stutzen wird zu erwärmende Frischluft zugeführt, die von der in den Abgasen enthaltene Energie erwärmt und anschließend über weitere Stutzen, z. B. in den Innenraum eines mit einer solchen Abgasanlage ausgestatteten Kraftfahrzeugs zugeführt wird.

Für die Regelung des Kraftstoff-Luftgemisches der Brennkraftmaschine und zur Überwachung der Funktionstüchtigkeit der Katalysatoren sind mehrere Lambdasonden in der Abgasanlage angeordnet. Die Regelung des Gemisches übernehmen dabei jeweils eine oder zwei stromauf der Katalysatoren angeordnete erste Lambdasonden, während stromab von Katalysatoren angeordnete zweite bzw. dritte Sonden der Katalysatorüberwachung dienen.

Die Erfindung wird beispielhaft anhand der nachfolgend aufgeführten Figuren erläutert.

Es zeigen:
- Fig. 1: schematisch eine erste Ausführungsform der Erfindung von unten,
- Fig. 2: schematisch eine zweite Ausführungsform der Erfindung von unten,
- Fig. 3: schematisch eine dritte Ausführungsform der Erfindung von unten und
- Fig. 4: einen Schnitt entlang der Linie IV-IV gemäß Fig. 1.

Eine in ein Kraftfahrzeug eingebaute Brennkraftmaschine weist zwei Zylinderreihen 1, 2 in Boxeranordnung auf. An Zylinderköpfe 3, 4 sind von einzelnen Zylindern 5 ausgehende Abgasrohre 6 angeordnet, die je Zylinderreihe 1, 2 in einem Stutzen 7 zusammengeführt sind.
An diese Stutzen 7 sind Abgassammelleitungen 8 angeschlossen, die das Abgas der Zylinderreihen 1, 2 einem Gehäuse 9 zuführen. Dieses Gehäuse 9 erstreckt sich endseitig der Brennkraftmaschine quer zu deren Längsrichtung F und weist im Querschnitt eine ovale Fläche auf (Fig. 4). In eine zentral gelegene Expansionskammer 10 münden senkrecht beide Leitungen 8 mit Endstücken 11, die endseitig mit einem Deckel 12 verschlossen und auf ihrer Mantelfläche 13 mit radialen Öffnungen 14 versehen sind.
Beidseitig der Kammer 10 ist ein kreisförmiger Rohrabschnitt 15 angeordnet, der mit einem stirnseitigen, perforierten Blech 16 die Kammer 10 begrenzt und endseitig in einem Abschlußdeckel 17 des Gehäuses 9 gehalten ist.
Innerhalb des Abschnittes 15 sind zwei einen Hauptkatalysator 18 bildende Monolithen 19 axial beabstandet angeordnet. Zwischen dem Gehäuse 9, einem Abschlußdeckel 17, einem Blech 16 und einem Rohrabschnitt 15 ist somit jeweils ein Dämpfervolumen V ausgebildet.
Beidseitig außerhalb des Gehäuses 9 ist ein Auslaß 20 für Abgase angeordnet, der einen an den Abschlußdeckel 17 angeschlossenen Endschalldämpfer 21 sowie ein mit der Atmosphäre verbundenes Endrohr 22 umfaßt.

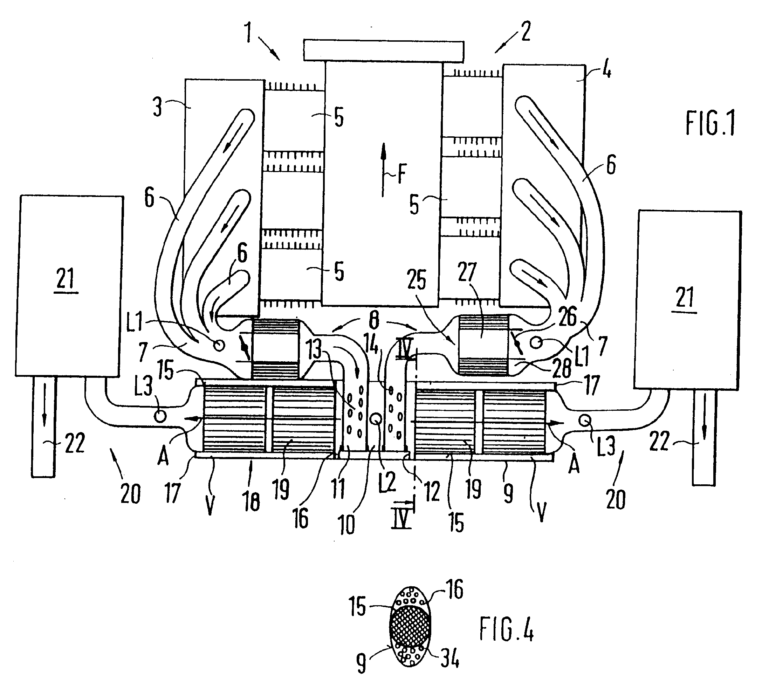

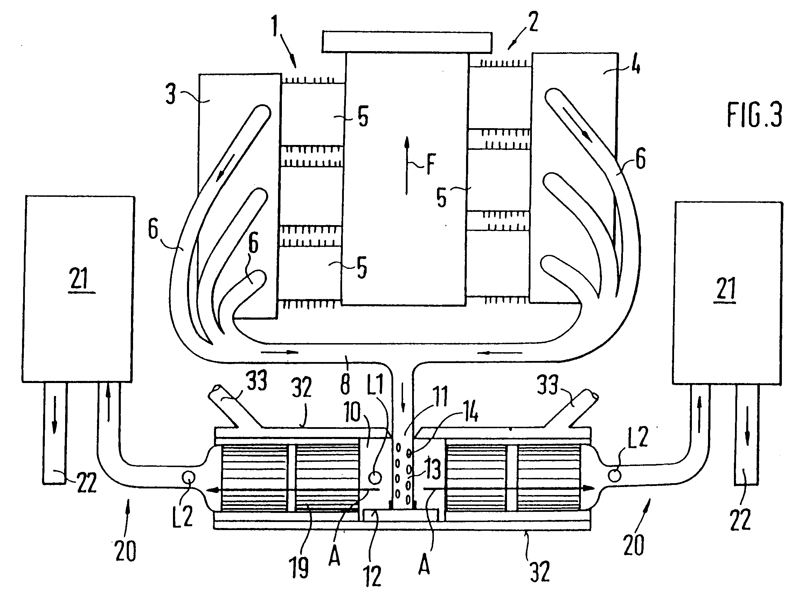

Gemäß einer ersten Ausführungsform der Erfindung (Fig. 1) sind in den Abgassammelleitungen 8 schaltbare Startkatalysatoren 25 angeordnet, die einen mit einer Klappe 26 verschließbaren Zentralkanal 27 und einen das Katalysatormaterial enthaltenden Ringkanal 28 aufweisen. Die Abgassammelleitungen 8 können vor Eintritt in die Expansionskammer 10 zusammengeführt werden, so daß lediglich ein Endstück 11 mittig in dieser Kammer 10 angeordnet ist (Fig. 3).

Zur Überwachung der Funktionstüchtigkeit der Haupt- und Startkatalysatoren 18, 25 sowie zur Regelung des der Brennkraftmaschine zugeführten Kraftstoff-Luftgemisches sind mehrere, den Sauerstoffgehalt im Abgas erfassende Lambdasonden in der Abgasanlage angeordnet. Zwei erste Sonden L1 sind stromauf der Startkatalysatoren 25 angeordnet, eine zweite Sonde L2 in der Expansionskammer 10 sowie zwei dritte Sonden L3 stromab der Hauptkatalysatoren 18.

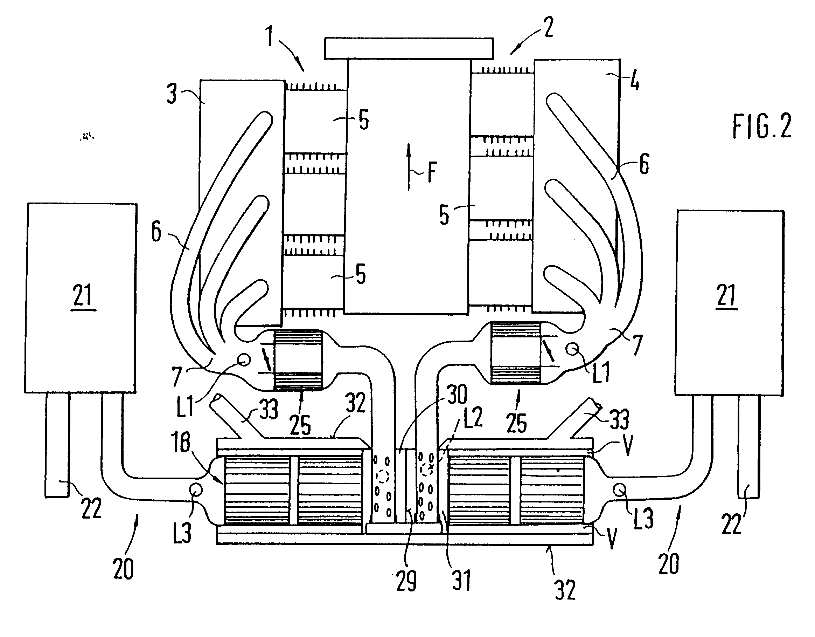

In einer zweiten Ausführungsform gemäß Fig. 2 ist die Expansionskammer 10 durch eine Wand 29 in Teilkammern 30, 31 getrennt, in die jeweils ein Endstück 11 mündet. Hierbei ist in jeder Teilkammer 30, 31 eine Lambdasonde L2 angeordnet.
Gemäß dieser Ausführung ist das Gehäuse 9 doppelwandig als Wärmetauscher 32 ausgeführt. Über einen nicht gezeigten Eintritt wird dem Wärmetauscher 32 zu erwärmende Frischluft zugeführt, die mittels der in den Abgasen enthaltenden Wärmeenergie erwärmt und über Stutzen 33 als Heizluft dem Innenraum des Kraftfahrzeuges zugeführt wird.
In beiden Ausführungsformen der Erfindung kann anstelle eines Startkatalysators 25 in einer Abgassammelleitung 8 jedem Abgasrohr 6 eines Zylinders 5 ein eigener Startkatalysator 25 zugeordnet sein.

Die dritte Ausführungsform gemäß Fig. 3 zeigt eine Abgasanlage ohne Startkatalysatoren 25, bei der die Abgassammelleitung 8 vor Eintritt in die Expansionskammer 10 zusammengeführt sind und mit einem gemeinsamen Endstück 11 in diese Kammer 10 münden; jedoch können auch zwei Endstücke 11 gemäß Fig. 1 angeordnet werden.
Eine erste Lambdasonae L1 ist in der Kammer 10 angeordnet und jeweils eine zweite Sonde L2 stromab der Hauptkatalysatoren 18.

Der Wärmetauscher 32 kann wahlweise bei allen genannten Ausführungsformen vorgesehen sein.
Die jeweils ersten Lambdasonden L1 dienen der Regelung des Kraftstoff-Luftgemisches, die zweiten bzw. dritten Sonden L2 bzw. L3 der Überwachung der Katalysatoren 18, 25.
Da immer eine möglichst schnelle Regelung erwünscht ist, kann bei der dritten Ausführung (Fig. 3) je eine erste Sonde L1 in jedem Stutzen 7 angeordnet sein. Mit dem Differenzsignal zwischen ersten und zweiten bzw. zweiten und dritten Sonden L1, L2 bzw. L2, L3 wird die Funktionstüchtigkeit der Katalysatoren 18, 25 überwacht.

Im Betrieb der Brennkraftmaschine werden die Abgase entlang der eingezeichneten Pfeile in der Abgasanlage geführt.
Unmittelbar nach dem Start der Brennkraftmaschine wird das Abgas bei geschlossenem Zentralkanal 27 über die Ringkanäle 28 geleitet, wo es die vergleichsweise kleinen Startkatalysatoren 25 schnell erwärmt und somit bereits frühzeitig eine Abgasreinigung bewirkt.
In hier nicht näher beschriebener Weise öffnen die Klappen 26 den Zentralkanal 27 bei Erreichen der Anspringtemperatur der Hauptkatalysatoren 8, so daß die Abgase dem Weg des geringsten Widerstandes folgend, nicht mehr oder nur gering den Ringkanal 28 durchströmen, wodurch die Lebensdauer erhöht wird.
Anschließend führen die Abgassammelleitungen 8 das Abgas über die Endstücke 11 der Expansionskammer 10 zu. Gemäß der ersten und dritten Ausführungsform werden die Abgase aller Zylinder 5 der Brennkraftmaschine spätestens in der Kammer 10 vermischt, dann in zwei gleiche Abgasströme A aufgeteilt, welche die Hauptkatalysatoren 18 durchströmen und anschließend über je einen Auslaß 20 der Atmosphäre 20 zugeführt.
Gemäß der zweiten Ausführungsform der Erfindung erfolgt keine Vermischung zwischen dem Abgas der Zylinderreihen 1, 2 aufgrund der Wand 29. Das Abgas wird hierbei für jede Zylinderreihe 1, 2 völlig getrennt geführt und behandelt.
Bei allen Ausführungen ist das Dämpfervolumen V über Durchbrüche 34 (Fig. 4) in den Blechen 16 an das Volumen der Expansionskammer 10 angekoppelt.

## Patentansprüche

1. Abgasanlage einer mehrzylindrigen Brennkraftmaschine, deren Abgase mittels einer Abgassammelleitung etwa mittig einem Gehäuse zugeführt werden, das an gegenüberliegenden Enden Katalysatoren aufweist, wobei das gesamte Abgas stromab der Katalysatoren der Atmosphäre zugeführt wird, dadurch gekennzeichnet, daß die Abgassammelleitung (8) mit einem senkrecht in eine zentral in dem Gehäuse (9) angeordnete Expansionskammer (10) ragenden Endstück (11) versehen ist, welches auf seiner Mantelfläche (13) mit radialen Öffnungen (14) versehen ist, und daß jeder einen Katalysator (Hauptkatalysator 18) durchströmmende Abgasstrom (A) über einen separaten Auslaß (20) mit der Atmosphäre verbunden ist.

2. Anlage nach Anspruch 1, mit in zwei Reihen zusammengefaßten Zylindern und von den Zylindern zu der Abgassammelleitung führenden Abgassrohren, dadurch gekennzeichnet, daß jeder Zylinderreihe (1, 2) eine Abgassammelleitung (8) zugeordnet ist, welche mit einem Endstück (11) in die Expansionskammer (10) mündet.

3. Anlage nach Anspruch 1, gekennzeichnet durch ein sich quer zur Längsrichtung (F) der Brennkraftmaschine erstreckendes Gehäuse (9).

4. Anlage nach den Ansprüchen 1 oder 2, dadurch gekennzeichnet, daß die Endstücke (11) endseitig verschlossen sind.

5. Anlage nach einem oder mehreren der vorhergehenden Ansprüche, dadurch gekennzeichnet, daß jede Abgassammelleitung (8) einen Katalysator (Startkatalysator 25) aufweist.

6. Anlage nach Anspruch 5, dadurch gekennzeichnet, daß jeder Startkatalysator (25) einen verschließbaren Zentralkanal (27) und einen ihn umgebenden, das Katalysatormaterial enthaltenden Ringkanal (28) aufweist.

7. Anlage nach Anspruch 1, dadurch gekennzeichnet, daß das Gehäuse (9) doppelwandig als mit Stutzen (33) versehener Wärmetauscher (32) ausgeführt ist, der Frischluft mittels der Wärmeenergie der Abgase erwärmt.

8. Anlage nach Anspruch 2, dadurch gekennzeichnet, daß in der Expansionskammer (10) zwischen den Endstücken (11) eine Teilkammern (30, 31) begrenzende Wand (29) angeordnet ist.

9. Anlage nach einem oder mehreren der vorhergehenden Ansprüche, dadurch gekennzeichnet, daß stromauf und/oder stromab eines jeden Katalysators (Hauptkatalysator 18, Startkatalysator 25) Lambdasonden (L1, L2, L3) angeordnet sind.

10. Anlage nach einem oder mehreren der vorhergehenden Ansprüche, dadurch gekennzeichnet, daß stromauf eines jeden Startkatalysators (25) und stromab eines jeden Hauptkatalysators (18) und in der Expansionskammer (10) Lambdasonden (L1, L2, L3) angeordnet sind.

11. Anlage nach einem oder mehreren der vorhergehenden Ansprüche, dadurch gekennzeichnet, daß jedem Abgasrohr (6) ein eigener Katalysator (Startkatalysator 25) zugeordnet ist.

## Claims

1. An exhaust-gas arrangement of a multiple-cylinder internal-combustion engine, the exhaust gases of which are fed by means of an exhaust-gas manifold substantially centrally to a housing having catalysts at opposite ends, wherein the entire exhaust gas is fed to the outside atmosphere downstream of the catalysts, **characterized in that** the exhaust-gas manifold (8) is provided with an end member (11) which projects at right angles into an expansion chamber (10) arranged centrally in the housing (9) and which is provided on the generated surface (13) thereof with radial openings (14), and each exhaust-gas flow (**A**) passing through a catalyst (main catalyst 18) communicates with the outside atmosphere by way of a separate outlet (20).

2. An arrangement according to Claim 1, having cylinders combined in two rows and exhaust-gas pipes leading from the cylinders to the exhaust-gas manifold, **characterized in that** each row (1, 2) of cylinders has associated therewith an exhaust-gas manifold (8) opening with an end piece (11) into the expansion chamber (10).

3. An arrangement according to Claim 1, **characterized by** a housing (9) extending transversely to the longitudinal direction (**F**) of the internal-combustion engine.

4. An arrangement according to Claim 1 or 2, **characterized in that** the end pieces (11) are closed at the ends.

5. An arrangement according to one or more of the preceding Claims, **characterized in that** each exhaust-gas manifold (8) has a catalyst (starting catalyst 25).

6. An arrangement according to Claim 5, **characterized in that** each starting catalyst (25) has a closable central duct (27) and an annular duct (28) surrounding the said central duct (27) and containing catalytic material.

7. An arrangement according to Claim 1, **characterized in that** the housing (9) is made double-walled as a heat exchanger (32) provided with sockets (33) and heating fresh air by means of the thermal energy of the exhaust gases.

8. An arrangement according to Claim 2, **characterized in that** a wall (29) bounding partial chambers (30, 31) is arranged in the expansion chamber (10) between the end pieces (11).

9. An arrangement according to one or more of the preceding Claims, **characterized in that** lambda probes (**L1**, **L2**, **L3**) are arranged upstream and/or downstream of each catalyst (main catalyst 18, starting catalyst 25).

10. An arrangement according to one or more of the preceding Claims, **characterized in that** lambda probes (**L1**, **L2**, **L3**) are arranged upstream of each starting catalyst (25) and downstream of each main catalyst (18) and in the expansion chamber (10).

11. An arrangement according to one or more of the preceding Claims, **characterized in that** each exhaust-gas pipe (6) has its own catalyst (starting catalyst 25) associated therewith.

## Revendications

1. Installation d'échappement d'un moteur à combustion interne multi-cylindres, dont les gaz d'échappement sont amenés, au moyen d'un collecteur de gaz d'échappement, sensiblement au centre d'un carter, qui comporte à des extrémités opposées, des éléments catalytiques, la totalité des gaz d'échappement étant amenés à l'atmosphère en aval des éléments catalytiques, caractérisé en ce que le collecteur des gaz d'échappement (8) est pourvu d'une partie terminale (11), qui s'engage perpendiculairement dans une chambre de détente (10) disposée de manière centrale dans le carter (9), et qui est munie d'ouvertures radiales (14) sur sa surface périphérique (13), et en ce que chacun des courants de gaz d'échappement (A) s'écoulant au travers d'un élément catalytique (élément catalytique principal 18), est raccordé à l'atmosphère par l'intermédiaire d'une sortie distincte (20).

2. Installation selon la revendication 1, comprenant des cylindres regroupés en deux rangées, ainsi que des tubes d'échappement conduisant des cylindres au collecteur des gaz d'échappement, caractérisée en ce qu'à chaque rangée de cylindres (1, 2) est associée un collecteur des gaz d'échappement (8), qui débouche par une partie terminale (11), dans la chambre de détente (10).

3. Installation selon la revendication 1, caractérisée par un carter (9) s'étendant transversalement à la direction longitudinale (F) du moteur à combustion interne.4. Installation selon les revendications 1 ou 2, caractérisée en ce que les parties terminales (11) sont fermées à leur extrémité.

4. Installation selon la revendication 1 ou 2, caractérisée en ce que les parties terminales sont fermées à leur extrémité.

5. Installation selon l'une ou plusieurs des revendications précédentes, caractérisée en ce que chaque collecteur des gaz d'échappement (8) comprend un élément catalytique (élément catalytique d'amorçage 25).

6. Installation selon la revendication 5, caractérisée en ce que chaque élément catalytique d'amorçage (25) comporte un canal central (27) pouvant être obturé, et un canal annulaire (28) entourant ce dernier et renfermant le matériau catalytique.

7. Installation selon la revendication 1, caractérisée en ce que le carter (9) est à double paroi et réalisé sous forme d'échangeur de chaleur (32) comportant des raccords (33), et assurant le chauffage d'air frais au moyen de l'énergie calorifique des gaz d'échappement.

8. Installation selon la revendication 2, caractérisée en ce que dans la chambre de détente (10), entre les parties terminales (11), est disposée une paroi (29) délimitant des chambres partielles (30, 31).

9. Installation selon l'une ou plusieurs des revendications précédentes, caractérisée en ce qu'en amont et/ou en aval de chacun des éléments catalytiques (élément catalytique principal 18, élément catalytique d'amorçage 25), sont disposées des sondes lambda (L1, L2, L3).

10. Installation selon l'une ou plusieurs des revendications précédentes, caractérisée en ce que des sondes lambda (L1, L2, L3) sont disposées en amont de chacun des éléments catalytiques d'amorçage (25), et en aval de chacun des éléments catalytiques principaux (18), ainsi que dans la chambre de détente (10).

11. Installation selon l'une ou plusieurs des revendications précédentes, caractérisée en ce qu'à chacun des tubes d'échappement (6) est associé un propre élément catalytique (élément catalytique d'amorçage 25).
